Europäisches Patentamt

European Patent Office

Office européen des brevets

(11) Veröffentlichungsnummer: **0 282 636**
**A2**

## (12) EUROPÄISCHE PATENTANMELDUNG

(21) Anmeldenummer: 87115557.8

(22) Anmeldetag: 23.10.87

(51) Int. Cl.4: **F02D 41/08** , **F02D 41/16** , **F02D 35/00** , **F02D 41/18**

(30) Priorität: 19.03.87 DE 3708998

(43) Veröffentlichungstag der Anmeldung:
21.09.88 Patentblatt 88/38

(84) Benannte Vertragsstaaten:
**DE FR GB SE**

(71) Anmelder: **VDO Adolf Schindling AG**
**Gräfstrasse 103**
**D-6000 Frankfurt/Main(DE)**

(72) Erfinder: **Meicher, Joachim**
**Traubenhüttenweg 7**
**D-6238 Hofheim/Ts.(DE)**

(74) Vertreter: **Klein, Thomas, Dipl.-ing. (FH)**
**Sodener Strasse 9 Postfach 6140**
**D-6231 Schwalbach a. Ts.(DE)**

(54) System zur Regelung der Leerlaufdrehzahl eines Verbrennungsmotors.

(57) Bei einem System zur Regelung der Leerlaufdrehzahl eines Verbrennungsmotors, wobei außer dem Ist-Wert der Drehzahl ein zugeführtes Signal ausgewertet wird, welches die Motortemperatur wiedergibt, wird eine vorgegebene Temperatur angenommen, wenn das zugeführte Signal außerhalb eines vorgegebenen Bereichs liegt. Vorzugsweise wird einem Stellglied eine Stellgröße zugeführt, deren Wert zwischen einer unteren und oberen Aussteuerungsgrenze liegt. Die Aussteuerungsgrenzen sind vom zugeführten Signal abhängig; vorgegebene Aussteuerungsgrenzen werden wirksam, wenn das zugeführte Signal außerhalb des vorgegebenen Bereichs liegt.

EP 0 282 636 A2

## System zur Regelung der Leerlaufdrehzahl eines Verbrennungsmotors

Die Erfindung betrifft ein System zur Regelung der Leerlaufdrehzahl eines Verbrennungsmotors, wobei außer dem Ist-Wert der Drehzahl ein zugeführtes Signal ausgewertet wird, welches die Motortemperatur wiedergibt.

Da sich der Luftbedarf eines Verbrennungsmotors mit der Temperatur stark ändert, wird bei bekannten Leerlaufreglern eine Anpassung des Aussteuerungsbereichs über einen Temperaturgeber vorgegeben. Bei kaltem Motor kann der Regler die volle Öffnung des Stellgliedes zulassen. Ist dagegen der Verbrennungsmotor warm, wird der Aussteuerungsbereich des Reglers über den Temperaturgeber begrenzt. Da die Regelgeschwindigkeit wegen der Stabilität des Regelkreises begrenzt ist, wird durch die temperaturabhängigen Aussteuerungsgrenzen eine schnellere Erfassung des Arbeitspunktes der Regelung ermöglicht. Das dem Leerlaufdrehzahlregler zugeführte Signal, welches der Motortemperatur entspricht, kann jedoch durch fehlerhafte Leitungen oder Steckverbindungen gestört sein. Es kann sich dabei ein Kurzschluß, eine Unterbrechung oder ein Schluß mit einer beispielsweise höheren Spannung ergeben. Diese Störungen führen zu einer zu hohen Motordrehzahl, die nicht mehr im Bereich der Leerlaufdrehzahl liegt, oder zum Stehenbleiben des Motors. Damit kann es zu gefährlichen Situationen beim Betrieb des Kraftfahrzeugs kommen.

Aufgabe der vorliegenden Erfindung ist es, die Auswirkungen der obengenannten Störungen zu vermeiden.

Das erfindungsgemäße System ist dadurch gekennzeichnet, daß eine vorgegebene Temperatur angenommen wird, wenn das zugeführte Signal außerhalb eines vorgegebenen Bereichs liegt. Eine Weiterbildung der Erfindung sieht vor, daß einem Stellglied eine Stellgröße zugeführt wird, deren Wert zwischen einer unteren und oberen Aussteuerungsgrenze liegt, daß die Aussteuerungsgrenzen vom zugeführten Signal abhängig sind und daß vorgegebene Aussteuerungsgrenzen wirksam werden, wenn das zugeführte Signal außerhalb des vorgegebenen Bereichs liegt.

Eine vorteilhafte Ausgestaltung der Erfindung besteht darin, daß ein Mikrocomputer mit einem Analog/Digital-Wandler als Regler ausgebildet ist, daß ein temperaturabhängiger Widerstand über eine Leitung mit einem im Bereich des Mikrocomputers angeordneten Widerstand in Reihe geschaltet ist, daß die Reihenschaltung mit einer stabilisierten Spannung beaufschlagt ist, welche ferner dem Mikrocomputer zugeführt ist, und daß der der Leitung zugewandte Anschluß des Widerstandes mit dem Eingang des Analog/ Digital-Wandlers verbunden ist.

Eine weitere vorteilhafte Ausgestaltung, welche auch bei Auftreten von Schlussen zwischen der Leitung zum Geber und der Batteriespannung geeignet ist, besteht darin, daß zwischen der Leitung und dem Eingang des Analog/Digital-Wandlers ein weiterer Widerstand vorgesehen ist und daß der Eingang des Analog/Digital-Wandlers mit dem Eingang des Mikrocomputers für die stabilisierte Spannung über eine Diode verbunden ist.

Die Erfindung läßt zahlreiche Ausführungsformen zu. Eine davon ist schematisch in der Zeichnung an Hand mehrerer Figuren dargestellt und nachfolgend beschrieben. Es zeigt:

Fig. 1 Teile des erfindungsgemäßen Systems soweit sie zur Erläuterung der Erfindung erforderlich sind,

Fig. 2 die Aussteuerungsgrenzen als Funktion der Motortemperatur, und

Fig. 3 einen Ausschnitt eines Programms des Mikrocomputers.

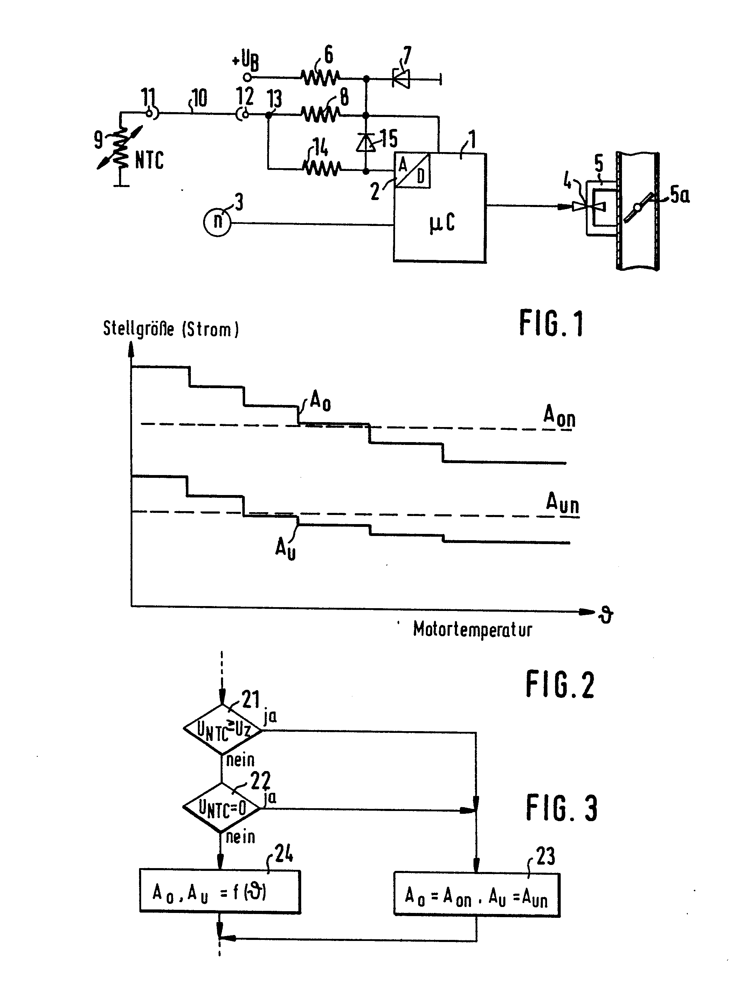

Das in Fig. 1 dargestellte System umfaßt einen Regler 1, der im wesentlichen aus einem integrierten Schaltkreis besteht. In an sich bekannter Weise umfaßt der integrierte Schaltkreis einen Mikrocomputer sowie einen Analog/Digital-Wandler 2. Von einem Drehzahlgeber 3 wird dem Regler ein Drehzahlsignal zugeführt - beispielsweise eine vorgegebene Anzahl von Impulsen pro Umdrehung des Verbrennungsmotors.

Durch Vergleich mit einem gespeicherten Soll-Wert wird ein Stellglied 4 gesteuert, das den Querschnitt eines sogenannten Bypasses 5 verstellt. Der Bypass 5 stellt die Umgehung einer schematisch angedeuteten Drosselklappe 5a dar.

Da die erforderliche Luftmenge von der Motortemperatur abhängt, wird der Stellbereich des Stellgliedes 4 entsprechend der Motortemperatur eingeengt, was in Fig. 2 schematisch dargestellt ist. Dabei sind jeweils eine obere und eine untere Aussteuerungsgrenze $A_o$ bzw. $A_u$ für das Stellglied 4 vorgesehen, die mit zunehmender Temperatur abnehmen. Für jeweils einen Teilbereich der Temperatur sind entsprechende Werte in einem, dem Mikrocomputer zugeordneten Speicher abgelegt.

Bei dem in Fig. 1 dargestellten Ausführungsbeispiel wird der Regler 1 von einer Betriebsspannung (+) gespeist, welche aus der Batteriespannung + $U_B$ mit Hilfe eines Widerstandes 6 und einer Z-Diode 7 gewonnen wird. Die Messung der Motortemperatur erfolgt nun derart, daß die stabilisierte Spannung über einen zweiten Widerstand 8 einem NTC-Widerstand 9 zugeführt wird. Dabei befindet sich der NTC-Widerstand 9 an einer geeigneten Stelle des Motors, während sich der Regler einschließlich der wenigen in Fig. 1 dargestellten diskreten Bauelemente in einem entsprechenden Gehäuse befinden. Eine Verbindung zwischen dem NTC-Widerstand 9 und der Reglerschaltung erfolgt durch eine Leitung 10, welche an beiden Enden mit Steckvorrichtungen 11, 12 versehen ist.

Der Schaltungspunkt 13 stellt den Eingang für das Temperatursignal dar und ist über einen Widerstand 14 mit dem Eingang des Analog/Digital-Wandlers 2 verbunden. Die Höhe der dem Analog/Digital-Wandler zugeführten Spannung richtet sich demnach nach dem Wert des NTC-Widerstandes 9 und damit nach der Motortemperatur.

Im Falle eines Kurzschlusses im Bereich des NTC-Widerstandes 9 oder eines Masseschlusses der Signalleitung 10 nimmt die Spannung am Eingang 13 Massepotential an, was im Mikrocomputer festgestellt wird, worauf die in Fig. 2 gestrichelt dargestellten Aussteuerungsgrenzen $A_{on}$ und $A_{un}$ vorgegeben werden.

Bei einer Unterbrechung der Signalleitung 10 wird die Spannung am Eingang 13 gleich der positiven Betriebsspannung (+) des Mikrocomputers, was ebenso zu einer Anwendung der vorgegebenen Aussteuerungsgrenzen führt. Das gleiche gilt für einen Schluß der Signalleitung mit einer Leitung, die eine höhere Spannung, beispielsweise die Betriebsspannung + $U_B$, führt. Für diesen Fall ist ein Widerstand 14 und eine Diode 15 vorgesehen. Letztere wird dann leitend und verhindert somit, daß die Eingangsspannung des Analog/Digital-Wandlers wesentlich über die Betriebsspannung des Mikrocomputers bzw. des Analog/Digital-Wandlers ansteigt.

Fig. 3 stellt als Flußdiagramm Teile eines Programms dar, die zur Überprüfung des Eingangssignals $U_{NTC}$ des Analog/Digital-Wandlers 2 und zur Umstellung auf sogenannten Notlauf dienen. Zunächst wird bei 21 festgestellt, ob $U_{NTC} \geq U_Z$ ist. Trifft dieses zu, werden bei 23 die Aussteuerungsgrenzen $A_o$ und $A_u$ gleich den für den Notlauf vorgegebenen Werten $A_{on}$ und $A_{un}$ gesetzt. Ist $U_{NTC}$ kleiner als $U_Z$, wird bei 22 geprüft, ob $U_{NTC} = 0$ - (Masse) ist. Zutreffendenfalls wird das Programm ebenfalls bei 23 fortgesetzt. Ist jedoch $U_{NTC} > 0$, so erfolgt bei 24 die Ermittlung der Aussteuerungsgrenzen $A_o$ und $A_u$ als Funktion der Temperatur.

## Ansprüche

1. System zur Regelung der Leerlaufdrehzahl eines Verbrennungsmotors, wobei außer dem Ist-Wert der Drehzahl ein zugeführtes Signal ausgewertet wird, welches die Motortemperatur wiedergibt, dadurch gekennzeichnet, daß eine vorgegebene Temperatur angenommen wird, wenn das zugeführte Signal außerhalb eines vorgegebenen Bereichs liegt.

2. System nach Anspruch 1, dadurch gekennzeichnet, daß einem Stellglied eine Stellgröße zugeführt wird, deren Wert zwischen einer unteren und oberen Aussteuerungsgrenze liegt, daß die Aussteuerungsgrenzen vom zugeführten Signal abhängig sind und daß vorgegebene Aussteuerungsgrenzen wirksam werden, wenn das zugeführte Signal außerhalb des vorgegebenen Bereichs liegt.

3. System nach einem der vorhergehenden Ansprüche, dadurch gekennzeichnet, daß ein Mikrocomputer (1) mit einem Analog/Digital-Wandler (2) als Regler ausgebildet ist, daß ein temperaturabhängiger Widerstand (9) über eine Leitung (10) mit einem im Bereich des Mikrocomputers (1) angeordneten Widerstand (8) in Reihe geschaltet ist, daß die Reihenschaltung mit einer stabilisierten Spannung beaufschlagt ist, welche ferner dem Mikrocomputer (1) zugeführt ist, und daß der der Leitung (10) zugewandte Anschluß des Widerstandes (8) mit dem Eingang des Analog/Digital-Wandlers (2) verbunden ist.

4. System nach Anspruch 3, dadurch gekennzeichnet, daß zwischen der Leitung (10) und dem Eingang des Analog/Digital-Wandlers (2) ein weiterer Widerstand (14) vorgesehen ist und daß der Eingang des Analog/Digital-Wandlers (2) mit dem Eingang des Mikrocomputers für die stabilisierte Spannung über eine Diode (15) verbunden ist.

FIG.1

Stellgröße (Strom)

$A_o$

$A_{on}$

$A_{un}$

$A_u$

Motortemperatur $\vartheta$

FIG.2

$U_{NTC} \geq U_Z$ — 21 — ja

nein

$U_{NTC} = 0$ — 22 — ja

nein

FIG. 3

$A_o , A_u = f(\vartheta)$ — 24

$A_o = A_{on} , A_u = A_{un}$ — 23